(19)

Europäisches Patentamt
European Patent Office
Office européen des brevets

(11) **EP 4 539 291 A1**

(12) **EUROPEAN PATENT APPLICATION**
published in accordance with Art. 153(4) EPC

(43) Date of publication:
**16.04.2025 Bulletin 2025/16**

(21) Application number: **23867880.9**

(22) Date of filing: **19.07.2023**

(51) International Patent Classification (IPC):
**H02J 3/38** (2006.01)          **H02J 3/32** (2006.01)

(52) Cooperative Patent Classification (CPC):
**H02J 3/32; H02J 3/38**

(86) International application number:
**PCT/JP2023/026388**

(87) International publication number:
**WO 2024/062754 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022 JP 2022151162**

(71) Applicant: **MITSUBISHI HEAVY INDUSTRIES
ENGINE
& TURBOCHARGER, LTD.
Sagamihara-shi, Kanagawa 252-5293 (JP)**

(72) Inventors:
• **TANAKA Masayuki
  Sagamihara-shi, Kanagawa 252-5293 (JP)**
• **OYA Takumi
  Sagamihara-shi, Kanagawa 252-5293 (JP)**
• **MITSUHASHI Masato
  Tokyo 100-8332 (JP)**

(74) Representative: **Studio Torta S.p.A.
Via Viotti, 9
10121 Torino (IT)**

(54) **CONTROL SYSTEM, HYBRID POWER SYSTEM, AND CONTROL METHOD**

(57)     Provided is a control system that suppresses fluctuations in the frequency and the voltage of a bus. A control system is for a power conversion device that performs charging/discharging of a secondary battery, in a power supply system including: a generator subject to unintended output variability; and the secondary battery. The control system: generates a charging/discharging command value that compensates for a difference between power generation of the generator and the total power generation of the power supply system; simulates driving of a virtual synchronous generator; calculates, on the basis of a rotor model for calculating the rotational speed of the virtual synchronous generator, an effective voltage value and a phase of the virtual synchronous generator; calculates a voltage and a phase at a connection point between the power conversion device and the bus; calculates a phase angle between the phase of the virtual synchronous generator and the phase of the connection point; determines a target value for the effective power of the power conversion device on the basis of the effective voltage value of the virtual synchronous generator, the voltage at the connection point, and the phase angle; and generates a power conversion device control command that includes the determined effective power target value and the charging/discharging command value.

FIG. 1

## Description

Technical Field

The present disclosure relates to a control system, a hybrid power system, and a control method for a micro grid system. The present disclosure claims priority based on Japanese Patent Application No. 2022-151162 filed in Japan on September 22, 2022, the contents of which are incorporated herein by reference.

Background Art

A so-called microgrid system or off-grid system is disclosed in which an inverter of renewable energy or a secondary battery is connected to a bus created by an alternating current generator driven by an engine or the like, and power is supplied according to a load of the bus (for example, PTL 1). In the power supply system disclosed in PTL 1, a technique for stably controlling the inverter connected to the bus by controlling charging/discharging of the secondary battery in accordance with variation in a frequency and power of the bus while controlling the inverter of the secondary battery as a virtual synchronous generator, is disclosed.

Citation List

Patent Literature

[PTL 1] Japanese Unexamined Patent Application Publication No. 2021-29087

Summary of Invention

Technical Problem

Meanwhile, even in a case where the technique disclosed in PTL 1 is applied, variation in the frequency and a voltage of the bus may be larger than that of a general large-scale system.
The present disclosure provides a control system, a hybrid power system, and a control method capable of solving the above problems.

Solution to Problem

According to an aspect of the present disclosure, a control system of the present disclosure is a control system of a power conversion device that converts direct current power output by a secondary battery into alternating current power and supplies the alternating current power to a bus and that converts alternating current power of the bus into direct current power and supplies the direct current power to the secondary battery, in a power supply system including a generator, which has unintended output variability, and the secondary battery, the control system including: a charging/discharging command unit that generates a charging/discharging command value for the secondary battery that compensates for a difference between generated power of the generator and total generated power of the power supply system; a virtual power generation calculation unit that calculates an effective voltage value and a phase of a virtual synchronous generator based on a rotor model that simulates driving of the virtual synchronous generator and that calculates a rotational speed of the virtual synchronous generator; a bus calculation unit that calculates a voltage and a phase at a connection point between the power conversion device and the bus; a phase difference angle calculation unit that calculates a phase difference angle between the phase of the virtual synchronous generator and the phase of the connection point; a target power determination unit that determines a target value of effective power of the power conversion device based on the effective voltage value of the virtual synchronous generator, the voltage at the connection point, and the phase difference angle; and a command generation unit that generates a control command for the power conversion device that includes the determined target value of the effective power and the charging/discharging command value.

According to an aspect of the present disclosure, a hybrid power system of the present disclosure includes a generator having unintended output variability, a secondary battery, a power conversion device that converts direct current power output by the secondary battery into alternating current power and supplies the alternating current power to a bus, and converts alternating current power of the bus into direct current power and supplies the direct current power to the secondary battery, and the above-described control system.

According to an aspect of the present disclosure, a control method of the present disclosure is a control method of a power conversion device that converts direct current power output by a secondary battery into alternating current power and supplies the alternating current power to a bus and that converts alternating current power of the bus into direct current power and supplies the direct current power to the secondary battery, in a power supply system including a generator, which has unintended output variability, and the secondary battery, the control method including: a step of generating a charging/discharging command value for the secondary battery that compensates for a difference between power generated by the generator and total generated power of the power supply system; a step of calculating an effective voltage value and a phase of a virtual synchronous generator based on a rotor model that simulates driving of the virtual synchronous generator and that calculates a rotational speed of the virtual synchronous generator; a step of calculating a voltage and a phase at a connection point between the power conversion device and the bus; a step of calculating a phase difference angle between the phase of the virtual synchronous generator and the phase of the connection point; a step of determining a target value of effective power of the power conversion device based on the effective voltage value of the virtual synchronous generator, the voltage at the connection point, and the phase difference angle; and a step of generating a control command for the power conversion device that includes the determined target value of the effective power and the charging/discharging command value.

Advantageous Effects of Invention

According to the control system, the hybrid power system, and the control method, it is possible to suppress variation in a frequency and a voltage of a bus.

Brief Description of Drawings

Fig. 1 is a schematic block diagram showing a configuration of a power supply system according to an embodiment.

Fig. 2 is a schematic block diagram showing an example of a command generation device according to the embodiment.

Fig. 3 is a first diagram showing an example of a calculation method of a charging/discharging command value according to the embodiment.

Fig. 4 is a second diagram showing an example of the calculation method of a charging/discharging command value according to the embodiment.

Fig. 5A is a diagram showing an effect of a virtual synchronous generator (VSG) function alone according to the embodiment.

Fig. 5B is a diagram showing an effect of a combination of the VSG function and a leveling function according to the embodiment.

Fig. 6 is a second schematic block diagram showing an example of the command generation device according to the embodiment.

Fig. 7 is a third schematic block diagram showing an example of the command generation device according to the embodiment.

Fig. 8 is a schematic block diagram showing a configuration of a computer according to the embodiment.

Description of Embodiments

<Embodiment>

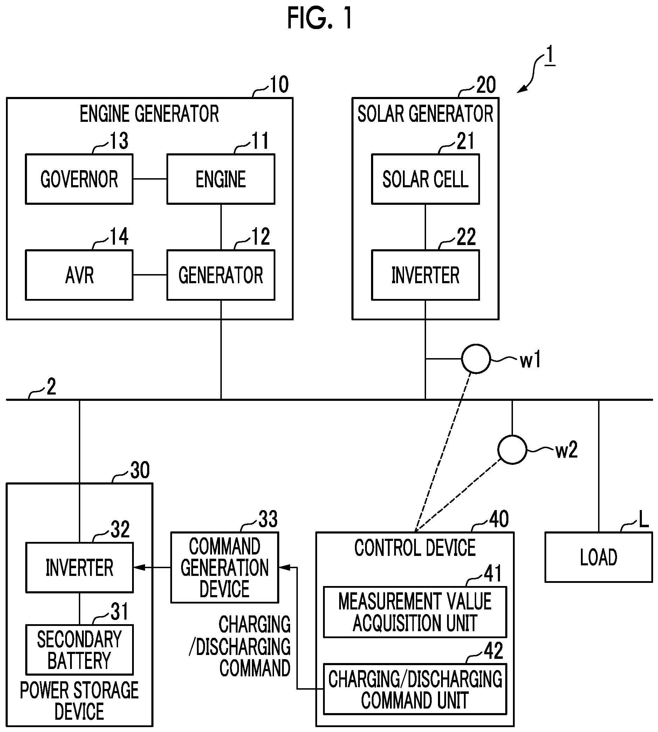

Hereinafter, a power supply system 1 of the present disclosure and the control thereof will be described with reference to Figs. 1 to 8.

(Configuration of Power Supply System)

As shown in Fig. 1, a power supply system 1 according to one embodiment is a hybrid power system that includes an engine generator 10, a solar generator 20, a power storage device 30, a command generation device 33, and a control device 40. The power supply system 1 supplies power to a load L through an autonomous operation. That is, the power supply system 1 is a so-called microgrid system or an off-grid system. The engine generator 10, the solar generator 20, and the power storage device 30 are connected to a bus 2, and supply power to the load L via the bus 2.

The engine generator 10 includes an engine 11, a generator 12, a governor 13, and an automatic voltage regulator (AVR) 14. The engine generator 10 is an alternating current generator that generates alternating current power by driving the generator 12 with rotation of the engine 11. The governor 13 controls a rotational speed of the engine 11 through an Hz-kW droop characteristic. A governor characteristic of the engine generator 10 is represented by, for example, a slope of a linear function connecting a plot related to a rated output and a rated frequency and a plot related to a settling frequency which is settled in a no-load state where the load is cut off from a zero output and a rated output. That is, the Hz-kW droop characteristic is a characteristic in which an output decreases as a frequency increases. In another embodiment, the governor characteristic may be realized by a proportional integral differential (PID) control. The AVR 14 regulates a terminal voltage of the generator 12 by controlling a current supplied to a field magnet winding of the generator 12 through a V-kbar droop characteristic. The V-kbar droop characteristic is a characteristic in which ineffective power decreases as a voltage increases. In another embodiment, another alternating current generator may be used instead of the engine generator 10.

The solar generator 20 includes a solar cell 21 and an inverter 22. The solar cell 21 is a direct current power supply device that converts sunlight into direct current power. The inverter 22 converts the direct current power generated by the solar cell 21 into alternating current power. The inverter 22 and the solar cell 21 do not necessarily have to be provided one-to-one. For example, a plurality of the solar cells 21 may be connected to one inverter 22. In another embodiment, instead of the solar generator 20, another renewable energy generator such as a wind power generator may be used. Alternatively, various generators of which output varies unintentionally may be used, not limited to renewable energy. For example, a generator that is operated independently of the power supply system 1 and that generates power regardless of the intention of the power supply system 1 may be used.

The power storage device 30 includes a secondary battery 31 and an inverter 32. A control command for the inverter 32 includes a target value of effective power and a target value of ineffective power. The inverter 32 converts the direct current power which is output (discharged) by the secondary battery 31 into alternating current power based on a command from the command generation device 33, and supplies the alternating current power to the bus 2, the alternating current power being synchronized with a voltage frequency of the bus 2. The inverter 32 synchronizes output power with the voltage frequency of the bus 2 via a phase lock loop (PLL) control. The inverter 32 converts a part of the alternating current power flowing through the bus 2 into direct current power based on a control command generated by the command generation device 33 according to a command from the control device 40, and charges the secondary battery 31 using the direct current power. As the secondary battery 31, for example, a lithium ion secondary battery may be used. The inverter 32 is a general-purpose current control type inverter that operates according to a control command related to an effective-ineffective power (P-Q) control. The inverter 32 according to another embodiment may operate according to a control command related to a target value of apparent power, a target value of a power factor angle, and a target value of a voltage frequency. The inverter 32 and the secondary battery 31 do not necessarily have to be provided one-to-one. For example, a plurality of the secondary batteries 31 may be connected to one inverter 32.

The command generation device 33 generates the control command for controlling the inverter 32 of the power storage device 30 based on a charging/discharging command from the control device 40, and outputs the control command to the power storage device 30. The command generation device 33 is a device provided separately from the power storage device 30. The command generation device 33 has a VSG function for causing the inverter 32 to behave like a synchronous generator. The power storage device 30 is controlled by using the VSG function, whereby it is possible to stabilize the system.

(Configuration of Command Generation Device)

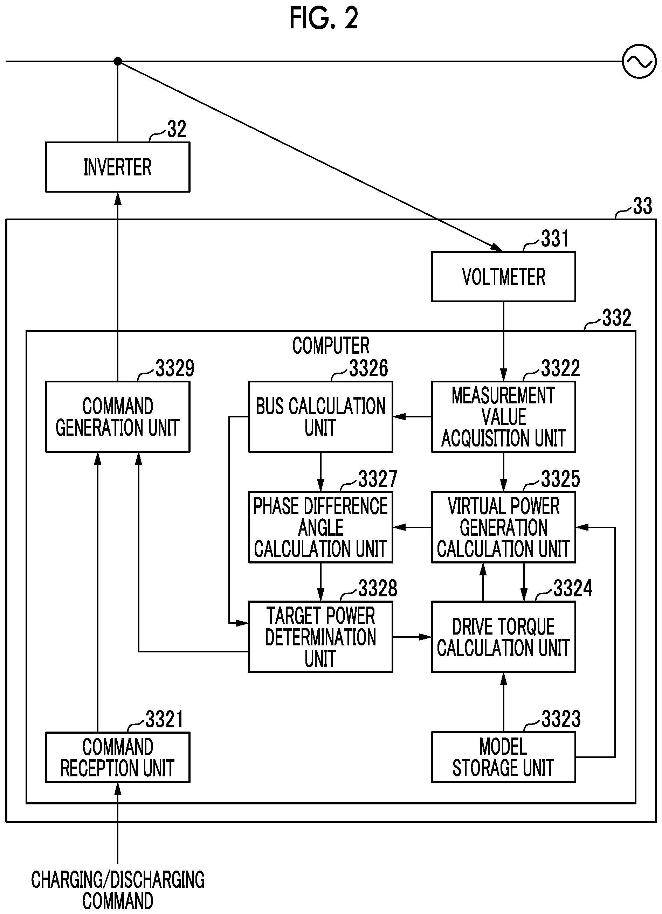

Here, a configuration of the command generation device 33 will be described with reference to Fig. 2. Fig. 2 shows an example of a schematic configuration of the command generation device 33. As shown in Fig. 2, the command generation device 33 includes a voltmeter 331 and a computer 332. The voltmeter 331 measures a voltage of a connection point between the inverter 32 and the bus 2. The computer 332 generates a control command based on a measurement value of the voltmeter 331.

The computer 332 includes a command reception unit 3321, a measurement value acquisition unit 3322, a model storage unit 3323, a drive torque calculation unit 3324, a virtual power generation calculation unit 3325, a bus calculation unit 3326, a phase difference angle calculation unit 3327, a target power determination unit 3328, and a command generation unit 3329.

The command reception unit 3321 receives the charging/discharging command from the control device 40. The charging/discharging command includes a command value of the effective power and a command value of the ineffective power.

The measurement value acquisition unit 3322 acquires the measurement value of the voltmeter 331. That is, the measurement value acquisition unit 3322 acquires an instantaneous voltage value of the connection point.

The model storage unit 3323 stores a mathematical model for simulating a behavior of a virtual synchronous generator. Specifically, the model storage unit 3323 stores a governor model M1 for simulating a behavior of a governor of a virtual synchronous generator and a rotor model M2 for simulating a behavior of a rotor of the virtual synchronous generator. In a case where an angular velocity of the rotor of the virtual synchronous generator and an angular velocity command value are input to the governor model M1, the governor model M1 outputs a drive torque value of the virtual synchronous generator. In a case where an electric torque value and the drive torque value of the virtual synchronous generator are input to the rotor model M2, the rotor model M2 outputs the angular velocity and a phase angle of the rotor of the virtual synchronous generator. As the governor model M1 and the rotor model M2, models disclosed in PTL 1 can be applied.

The drive torque calculation unit 3324 calculates the drive torque value of the virtual synchronous generator by inputting, to the governor model M1, a target value of the effective power determined by the target power determination unit 3328 and the angular velocity of the rotor of the virtual synchronous generator calculated by the virtual power generation calculation unit 3325 in a previous control.

The virtual power generation calculation unit 3325 calculates the angular velocity and the phase angle of the rotor of the virtual synchronous generator by inputting, to the rotor model M2, the drive torque value calculated by the drive torque calculation unit 3324. The virtual power generation calculation unit 3325 calculates an effective voltage value of the virtual synchronous generator based on the phase of the rotor and on the measurement value of the voltmeter 331 acquired by the measurement value acquisition unit 3322. For example, the measurement value acquisition unit 3322 calculates an effective voltage value of a frequency component of the rotor by sampling the instantaneous voltage value of the bus 2 at a frequency of the rotor with a PLL circuit and performing frequency conversion on the sampled data.

The bus calculation unit 3326 calculates an effective voltage value and a phase of the connection point based on the measurement value of the voltmeter 331 acquired by the measurement value acquisition unit 3322. For example, the bus calculation unit 3326 calculates an effective voltage value of a fundamental wave component by sampling the instantaneous voltage value of the bus 2 at the connection point in synchronization with a fundamental wave frequency with the PLL circuit and performing frequency conversion on the sampled data. For example, the bus calculation unit 3326 calculates the phase of the connection point based on the sampling performed in synchronization with the fundamental wave frequency.

The phase difference angle calculation unit 3327 calculates a phase difference angle as a difference between the phase of the bus 2 calculated by the bus calculation unit 3326 and the phase of the rotor of the virtual synchronous generator calculated by the virtual power generation calculation unit 3325.

The target power determination unit 3328 determines the target value of the effective power based on the effective voltage value of the virtual synchronous generator calculated by the virtual power generation calculation unit 3325, the effective voltage value of the bus 2 calculated by the bus calculation unit 3326, and the phase difference angle calculated by the phase difference angle calculation unit 3327. Specifically, the target power determination unit 3328 determines the target value of the effective power based on the following Equation (1).

$$Pvsg = Vgrid \times Vvsg \div X \times \sin\Delta\theta \ ... \ (1)$$

Here, Pvsg indicates the target value of the effective power. Vgrid indicates the effective voltage value of the bus 2. Vvsg indicates the effective voltage value of the virtual synchronous generator. X indicates a series reactance between the virtual synchronous generator and the bus 2. As a value of X, for example, a value twice the value which is set as a reactance of the virtual synchronous generator may be used. The series reactance X is a value which is at least larger than the reactance of the virtual synchronous generator. $\Delta\theta$ indicates the phase difference angle between the bus 2 and the virtual synchronous generator. Equation (1) is based on an equivalent circuit in which the series reactance X and the virtual synchronous generator are connected in series with respect to the bus 2. In another embodiment, the target power determination unit 3328 may determine the target value of the effective power by solving a Y parameter of a two-terminal-pair circuit in which the bus 2 and the virtual synchronous generator are connected. Equation (1) is equivalent to a case where an admittance of a π-type circuit which is an equivalent circuit of the two-terminal-pair circuit is set to 0.

The command generation unit 3329 generates the control command for the inverter 32 that includes the target value of the effective power determined by the target power determination unit 3328 and the charging/-discharging command received from the control device 40 by the command reception unit 3321. The command generation unit 3329 outputs the generated control command to the inverter 32.

(Configuration of Control Device)

The control device 40 monitors a power value of the bus 2 and a power value generated by the solar generator 20, and outputs the charging/discharging command to the engine generator 10 and to the power storage device 30. The power value of the bus 2 is the total generated power (power required by the load L) by the power supply system 1. For example, in a case where the generated power by the solar generator 20 is equal to or larger than a predetermined threshold value, such as in a daytime, the control device 40 outputs a power command to decrease the generated power by the engine generator 10 or stop power generation by the engine generator 10. In a case where the generated power by the solar generator 20 is smaller than a predetermined threshold value, such as in a night-time or in bad weather, the control device 40 outputs a power command to increase the generated power by the engine generator 10. The control device 40 compares the power value of the bus 2 with a demand power value according to the load L, and outputs the charging/discharging command to the power storage device 30 based on a difference in power. The control device 40 outputs the charging/discharging command for leveling variation in the generated power by the solar generator 20 that is unintentionally varied, to the power storage device 30. As shown in Fig. 1, with regard to these charging/discharging commands, the control device 40 includes a measurement value acquisition unit 41 and a charging/discharging command unit 42.

The measurement value acquisition unit 41 acquires a measurement value of the generated power (may be referred to as photovoltaic (PV) generated power) of the solar generator 20 and a measurement value of the total generated power by the power supply system 1. For example, a power meter w1 that measures the generated power of the solar generator 20 is provided between the inverter 22 and the bus 2, and the measurement value acquisition unit 41 acquires the power value measured by the power meter w1. For example, a power meter w2 that measures the total generated power of the power supply system 1 is provided on the bus 2, and the measurement value acquisition unit 41 acquires the power value measured by the power meter w2.

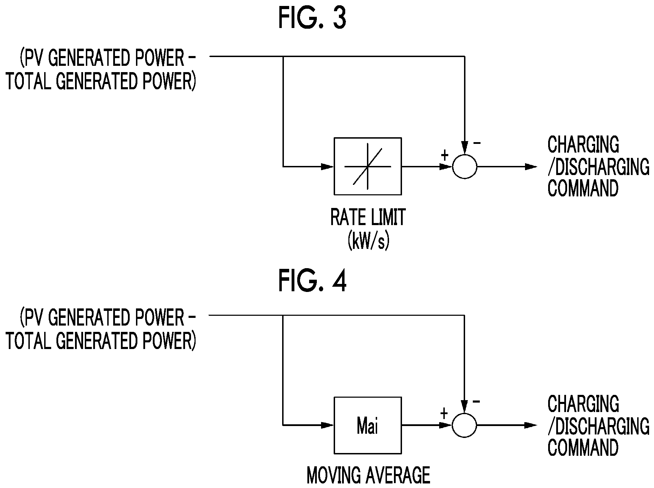

The charging/discharging command unit 42 generates a charging/discharging command value for leveling the difference between the generated power of the solar generator 20 and the total generated power. Next, a generation method of the charging/discharging command value for the leveling (leveling processes A and B) will be described with reference to Figs. 3 and 4.

(Leveling Process A: Rate Limit)

Fig. 3 is a first diagram showing an example of a calculation method of a charging/discharging command value according to the embodiment.

The charging/discharging command unit 42 subtracts the measurement value of the total generated power acquired by the measurement value acquisition unit 41 at time T from the measurement value of the PV generated power acquired by the measurement value acquisition unit 41 at the time T, and calculates a difference $\Delta W(T)$ therebetween. Next, the charging/discharging command unit 42 subtracts the measurement value of the total generated power acquired by the measurement value acquisition unit 41 at time $T+\Delta T$ from the measurement value of the PV generated power acquired by the measurement value acquisition unit 41 at the time $T+\Delta T$, and calculates a difference $\Delta W(T+\Delta T)$ therebetween. For example, the charging/discharging command unit 42 repeatedly calculates such a difference $\Delta W$ at a predetermined cycle $\Delta T$, sets a limit (rate limit) on a variation amount per unit time of the calculated difference $\Delta W$, and generates the charging/discharging command value for compensating for the variation amount per unit time that exceeds the rate limit. For example, it is assumed that the rate limit is set to 1 kW/s or less. In a case where the difference $\Delta W(T)$ calculated at a certain time T is -10 kW, $\Delta T$ is 1 second, and the difference calculated after 1 second is -10 kW, the variation per second of the difference is 0 kW/s, and the variation amount per unit time of the difference $\Delta W$ is 1 kW/s or less. In this case, the charging/discharging command unit 42 recognizes the variation amount as it is, and as shown in Fig. 3, the charging/discharging command unit 42 calculates -10 kW - (-10 kW/s) = 0 kW and generates the charging/-discharging command value for discharging the secondary battery 31 by this value (or does not generate the charging/discharging command value since charging/-discharging is not necessary). For example, in a case where the difference $\Delta W(T)$ calculated at a certain time T is -10 kW and the difference calculated after 1 second is -20 kW, the variation amount per unit time of the difference $\Delta W$ is -10 kW/s, and the absolute value of the variation amount per unit time exceeds 1 kW/s. In this case, the charging/discharging command unit 42 recognizes the upper limit value of the variation amount, that is, the variation by only the rate limit, and calculates -11 kW in which only the rate limit is reflected in the same direction (decreasing direction) as the variation from the last time value -10 kW to the present value -20 kW. As shown in Fig. 3, the charging/discharging command unit 42 calculates -11 kW - (-20 kW/s) = 9 kW and generates the charging/discharging command value for discharging the secondary battery 31 by this value. With this, the variation of the difference between the PV generated power and the total generated power is compensated.

(Leveling Process B: Moving Average)

Fig. 4 is a second diagram showing an example of the calculation method of a charging/discharging command value according to the embodiment.

The charging/discharging command unit 42 subtracts the measurement value of the total generated power acquired by the measurement value acquisition unit 41 at time T from the measurement value of the PV generated power acquired by the measurement value acquisition unit 41 at the time T, and calculates a difference $\Delta W(T)$ therebetween. Next, the charging/discharging command unit 42 subtracts the measurement value of the total generated power acquired by the measurement value acquisition unit 41 at time $T+\Delta T$ from the measurement value of the PV generated power acquired by the measurement value acquisition unit 41 at the time $T+\Delta T$, and calculates a difference $\Delta W(T+\Delta T)$ therebetween. The charging/discharging command unit 42 calculates the difference $\Delta W$ at the predetermined cycle $\Delta T$ and calculates the average (moving average) of the difference $\Delta W$ at the predetermined time (for example, 3 minutes). The charging/discharging command unit 42 repeats the calculation of the moving average of the difference $\Delta W$ and updates the value thereof. Meanwhile, the charging/discharging command unit 42 generates the charging/discharging command value based on the value obtained by subtracting the measurement value of the total generated power from the measurement value of the PV generated power and on the moving average calculated immediately before. For example, in a case where the moving average of the difference $\Delta W$ makes transition at -10 kW and the difference $\Delta W(T1)$ calculated at time T1 is -20 kW, the charging/discharging command unit 42 generates the charging/discharging command value for discharging the secondary battery 31 by -10 kW - (-20 kW) = 10 kW, as shown in Fig. 4. With this, the variation of the difference between the PV generated power and the total generated power is compensated.

The charging/discharging command unit 42 may generate the charging/discharging command in consideration of a state of charge (SOC) of the secondary battery 31. For example, upper and lower limit values are set for the SOC of the secondary battery 31. The charging/discharging command unit 42 acquires the SOC of the secondary battery 31 at a predetermined control cycle. The charging/discharging command unit 42 corrects the charging/discharging command value such that charging/discharging is performed within a range of the set upper and lower limit values while calculating the charging/discharging command value with the leveling process A or the leveling process B described above, and outputs the corrected charging/discharging command value to the command generation device 33.

(Operation)

With the above configuration, the control device 40 outputs the charging/discharging command value generated by the leveling process A or by the leveling process B to the command generation device 33. In the command generation device 33, the command reception unit 3321 receives the charging/discharging command value. The command generation device 33 obtains the phase and the angular velocity of the virtual synchronous generator, from the effective power command value and the angular velocity command value, based on the governor model M1 and the rotor model M2. The command generation device 33 obtains the effective voltage value and the phase of the bus 2 and the effective voltage value of the virtual synchronous generator, from the measurement value of the voltmeter 331. The command generation device 33 obtains a phase difference angle as a difference between the phase of the virtual synchronous generator and the phase of the bus 2. The command generation device 33 determines the target value of the effective power based on the effective voltage value of the bus 2, the effective voltage value of the virtual synchronous generator, and the phase difference angle, and generates the control command for the inverter 32 that includes the charging/discharging command value and the target value of the effective power. The inverter 32 is operated according to the control command generated by the command generation device 33. With this, compensation for unintended output variation of the solar generator 20 and load variation and characteristics corresponding to the virtual synchronous generator are realized.

(Effects)

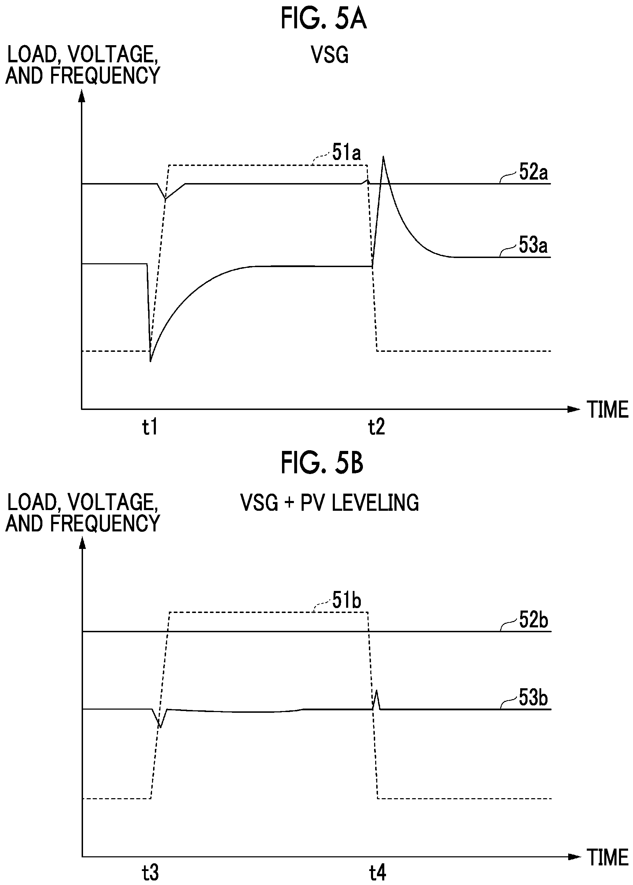

Fig. 5A shows a transition of the voltage and the frequency of the bus 2 in a case where the output of the power supply system 1 follows the load variation by applying only the VSG function of the command generation device 33 without applying the leveling control via the charging/discharging command unit 42. The vertical axis of Fig. 5A indicates the magnitudes of the load, the voltage, and the frequency, and the horizontal axis indicates time. A graph 51a shows a transition of the load, a graph 52a shows a transition of the voltage, and a graph 53a shows a transition of the frequency. As shown in Fig. 5A, in a case where the load is increased at time t1 and the load is decreased at time t2 (time t2 = time t1 + 60 seconds) without applying the leveling control (the leveling process A or the leveling process B) via the charging/discharging command unit 42, a slight disturbance occurs in the voltage (graph 52a) and large variation occurs in the frequency (graph 53a) due to the variation of the load. Although not shown, in a case where the same load variation occurs even though the VSG function of the command generation device 33 is not applied, the voltage and the frequency of the bus 2 are further significantly varied.

Fig. 5B shows a transition of the voltage and the frequency of the bus 2 in a case where the output of the power supply system 1 follows the load variation by applying both the leveling control via the charging/discharging command unit 42 and the VSG function of the command generation device 33. The vertical axis of Fig. 5B indicates the magnitudes of the load, the voltage, and the frequency, and the horizontal axis indicates time. A graph 51b shows a transition of the load, a graph 52b shows a transition of the voltage, and a graph 53b shows a transition of the frequency. The start was made from the same load as in the case of Fig. 5A, the load was increased at time t3 in the same manner as in the case of Fig. 5A, and the load was decreased to the original load at time t4 (time t4 = time t3 + 60 seconds), whereby the result shown in Fig. 5B was obtained. As shown in Fig. 5B, when both the leveling control via the charging/discharging command unit 42 and the VSG function of the command generation device 33 were applied, the voltage (graph 52b) could be controlled to be substantially constant with almost no influence from the load variation. Even for the frequency (graph 53b), the frequency could be immediately returned to the original frequency although the frequency slightly varied only immediately after the load was increased and decreased. In this example, the effect in a case where the load is greatly varied has been described with reference to the example, but it has been confirmed that the variation in the voltage and the frequency of the bus 2 can be suppressed as in the example shown in Fig. 5B even in a case where the load is constant and the generated power of the solar generator 20 is greatly varied. The VSG function of the command generation device 33 adds a virtual synchronization characteristic to the inverter 32 to cope with the variation in the voltage of the bus 2 and to stabilize the system, and is not intended to cancel the load variation or the like. The control cycle is about 0.1 milliseconds. Meanwhile, the leveling control via the charging/discharging command unit 42 is intended to level the difference between the PV generated power and the total generated power (cancel the difference), and thus can also cope with relatively large variation over a few seconds or more. As described with reference to Figs. 5A and 5B, the variation width of the bus 2 can be halved by combining the leveling control via the charging/discharging command unit 42 and the VSG function of the command generation device 33. In the related art, the engine output cannot be raised to the rated output in view of the output variation of the engine 11 in accordance with the load variation, but the output of engine 11 can be raised to the vicinity of the rated output by reducing the load variation with the leveling control via the charging/discharging command unit 42.

As described above, according to the present embodiment, the inverter 32 is controlled by combining the process of generating the charging/discharging command value for leveling the difference between the renewable energy generated power and the total generated power via the charging/discharging command unit 42 and the process of obtaining the effective voltage value and the phase of the bus 2 from the measurement value of the instantaneous voltage value at the connection point via the command generation device 33 and determining the target value of the effective power of the inverter 32 based on the effective voltage value of the virtual synchronous generator, the voltage at the connection point, and the phase difference angle. With this, it is possible to stably control the frequency and the voltage of the bus 2 even in a case where the load and/or the generated power of the solar generator 20 is varied.

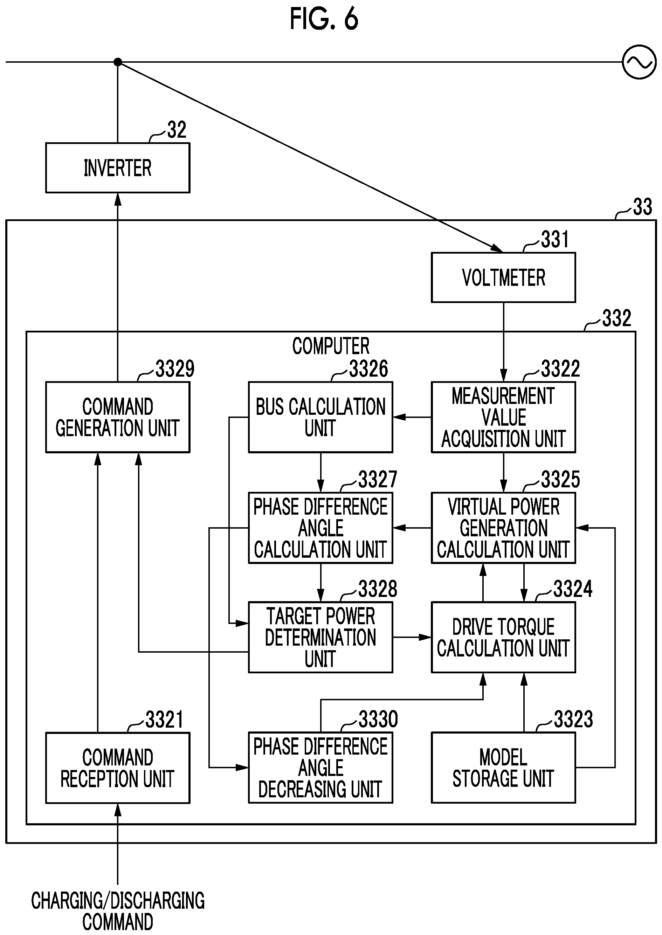

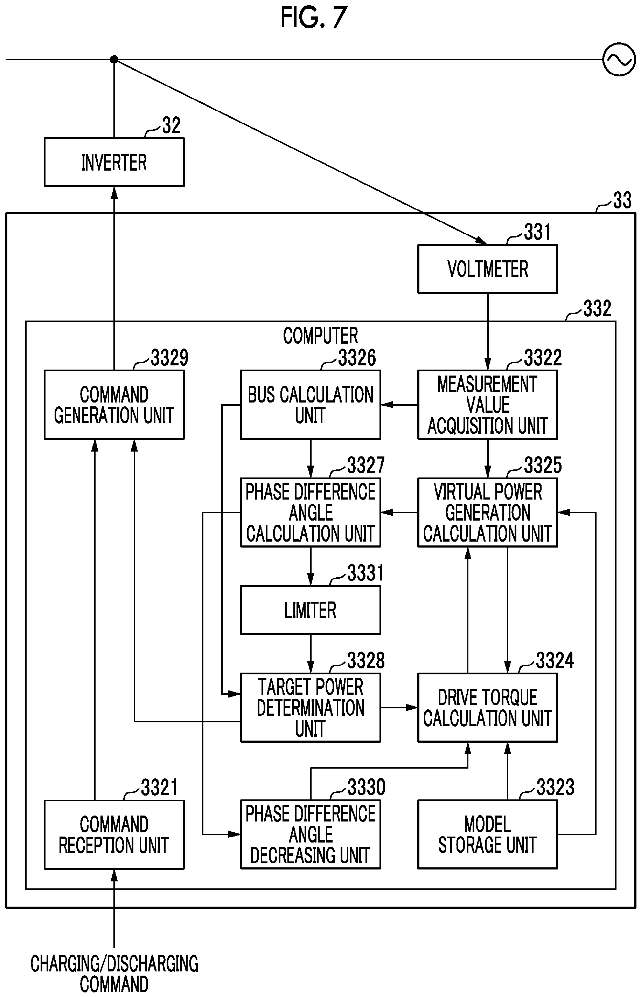

The command generation device 33 can have the configuration shown in Figs. 6 and 7. With the command generation device 33 shown in Fig. 2, the frequency of the virtual synchronous generator and the frequency of the bus 2 can be synchronized with each other. In a case where the frequency of the virtual synchronous generator and the frequency of the bus 2 are synchronized with each other, the inverter 32 is controlled while maintaining the phase difference angle at a synchronization timing. That is, the phase difference angle is in an offset state. Meanwhile, as the phase difference angle is closer to 0, a synchronization stability is higher, and as an absolute value of the phase difference angle is closer to π (180 degrees), a synchronization stability is lower. In particular, in order to stably operate the system, preferably, the absolute value of the phase difference angle is within π/2 (90 degrees). For this reason, the command generation device 33 shown in Fig. 6 synchronizes the frequency of the virtual synchronous generator and the frequency of the bus 2 while making the phase difference angle close to 0. Specifically, the command generation device 33 shown in Fig. 6 further includes a phase difference angle decreasing unit 3330 in addition to the configuration in Fig. 2. The phase difference angle decreasing unit 3330 uses a proportional integral (PI) control with the phase difference angle calculated by the phase difference angle calculation unit 3327 as input to calculate a correction rotational speed for canceling the phase difference angle, and corrects the angular velocity command value by adding the correction rotational speed to the angular velocity command value received by the command reception unit 3321. The drive torque calculation unit 3324 calculates a drive torque based on the corrected angular velocity command value.

The command generation device 33 in Fig. 6 corrects the target value of the rotational speed such that the phase difference angle approaches 0, and calculates the effective voltage value and the phase of the virtual synchronous generator based on the rotor model M2 and on the corrected target value of the rotational speed. Thereby, the command generation device 33 can synchronize the frequency of the virtual synchronous generator and the frequency of the bus 2 while making the phase difference angle close to 0. Therefore, the command generation device 33 can reduce a possibility that the absolute value of the phase difference angle exceeds π/2 and the system is in an unstable state due to instantaneous variation of the frequency of the bus 2.

As described above, in order to stably operate the system, preferably, the absolute value of the phase difference angle is within π/2. For this reason, the command generation device 33 shown in Fig. 7 controls the inverter 32 such that the phase difference angle always remains in a stable region. Specifically, the command generation device 33 shown in Fig. 7 further includes a limiter 3331 in addition to the configuration in Fig. 6. The limiter 3331 limits the phase difference angle calculated by the phase difference angle calculation unit 3327 to a value within a range of -π/2 to +π/2. The target power determination unit 3328 determines the target value of the effective power of the inverter 32 based on the phase difference angle limited by the limiter 3331. Thereby, the command generation device 33 can always make the phase difference angle remain in the stable region.

According to the command generation device 33 shown in Figs. 6 and 7 as described above, the inverter 32 can be stably controlled, and in combination with the leveling control via the charging/discharging command unit 42, the variation width of the voltage and the frequency of the bus 2 can be suppressed.

The command generation device 33 and/or the control device 40 according to the above-described embodiment may be configured by a single computer, respectively. The configuration of the command generation device 33 and/or the control device 40 may be implemented in a plurality of computers. In this case, the plurality of computers may cooperate with each other, and thus may function as the command generation device 33. The configurations of the command generation device 33 and the control device 40 may be implemented in one computer.

In the embodiment described above, the solar generator 20 has been described as an example of the renewable energy power generation, but the leveling control via the charging/discharging command unit 42 of the present embodiment can also be applied to a power supply system including wind power generation, hydraulic power generation, geothermal power generation, or the like and a secondary battery without being limited to the solar power generation (or the power supply system including the solar generator 20, another renewable energy power generation, and a secondary battery). The leveling control via the charging/discharging command unit 42 of the present embodiment can also be applied to a power supply system including various generators having unintended output variability instead of/in addition to the solar generator 20 without being limited to the renewable energy power generation.

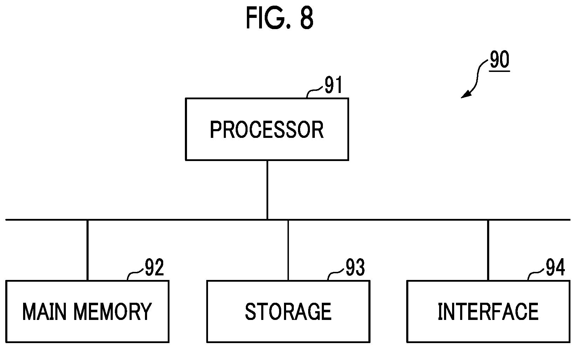

Fig. 8 is a schematic block diagram showing a configuration of a computer according to the embodiment.

A computer 90 includes a processor 91, a main memory 92, a storage 93, and an interface 94. Each of the command generation device 33 and the control device 40 described above is implemented in the computer 90. The operation of each processing unit described above is stored in the storage 93 in a form of a program. The processor 91 reads the program from the storage 93, loads the program into the main memory 92, and performs the above-described processes in accordance with the program. The processor 91 secures a storage area corresponding to each storage unit described above in the main memory 92 in accordance with the program. Examples of the processor 91 include a central processing unit (CPU), a graphic processing unit (GPU), and a microprocessor.

The program may realize some of functions fulfilled by the computer 90. For example, the program may fulfill the functions in combination with another program already stored in the storage or in combination with another program installed on another device. In another embodiment, in addition to the above-described configuration or instead of the above-described configuration, the computer 90 may include a custom large scale integrated circuit (LSI) such as a programmable logic device (PLD). Examples of the PLDs include a programmable array logic (PAL), a generic array logic (GAL), a complex programmable logic device (CPLD), and a field-programmable gate array (FPGA). In this case, some or all of the functions realized by the processor 91 may be realized by the integrated circuit. Such an integrated circuit is also included in an example of the processor.

Examples of the storage 93 include a hard disk drive (HDD), a solid state drive (SSD), a magnetic disc, a magneto-optical disc, a compact disc read only memory (CD-ROM), a digital versatile disc read only memory (DVD-ROM), and a semiconductor memory. The storage 93 may be an internal medium directly connected to a bus of the computer 90, or may be an external medium connected to the computer 90 via the interface 94 or a communication line. When this program is distributed to the computer 90 by using the communication line, the computer 90, in which the program is distributed, may load the program in the main memory 92 and execute the above process. In at least one embodiment, the storage 93 is a non-temporary tangible storage medium.

The program may realize some of the foregoing functions. Further, the program may be a program that realizes the functions described above in combination with other programs already stored in the storage 93, that is, a so-called difference file (difference program).

As described above, some embodiments according to the present disclosure have been described, but all of these embodiments are presented as examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

<Additional Notes>

The control system, the hybrid power system, and the control method described in each embodiment are ascertained as follows, for example.

(1) A control system according to a first aspect is a control system (control device 40, command generation device 33) of a power conversion device (inverter 32) that converts direct current power output by a secondary battery into alternating current power and supplies the alternating current power to a bus and that converts alternating current power of the bus into direct current power and supplies the direct current power to the secondary battery, in a power supply system including a generator, which has unintended output variability, and the secondary battery, the control system including: a charging/discharging command unit that generates a charging/discharging command value for the secondary battery that compensates for a difference between power generated by the generator and total generated power of the power supply system; a virtual power generation calculation unit that calculates an effective voltage value and a phase of a virtual synchronous generator based on a rotor model that simulates driving of the virtual synchronous generator and that calculates a rotational speed of the virtual synchronous generator; a bus calculation unit that calculates a voltage and a phase at a connection point between the power conversion device and the bus; a phase difference angle calculation unit that calculates a phase difference angle between the phase of the virtual synchronous generator and the phase of the connection point; a target power determination unit that determines a target value of effective power of the power conversion device based on the effective voltage value of the virtual synchronous generator, the voltage at the connection point, and the phase difference angle; and a command generation unit that generates a control command for the power conversion device that includes the determined target value of the effective power and the charging/discharging command value.

As a result, it is possible to suppress the variation in the frequency and the voltage of the bus.

(2) A control system according to a second aspect is the control system of (1), in which, in a case where variation per unit time of the difference between the power generated by the generator and the total generated power of the power supply system exceeds a predetermined threshold value, the charging/discharging command unit generates the charging/discharging command value that compensates for excess.

Accordingly, it is possible to generate the charging/discharging command value.

(3) A control system according to a third aspect is the control system of (1), in which the charging/discharging command unit generates the charging/discharging command value that compensates for a value obtained by subtracting the difference between the power generated by the generator and the total generated power of the power supply system from a moving average of the difference.

Accordingly, it is possible to generate the charging/discharging command value.

(4) A hybrid power system (power supply system 1) according to a fourth aspect includes a generator (solar generator 20, renewable energy generator, generator that is operated independently, or the like) having unintended output variability, a secondary battery, a power conversion device (inverter 32) that converts direct current power output by the secondary battery into alternating current power and supplies the alternating current power to a bus, and converts alternating current power of the bus into direct current power and supplies the direct current power to the secondary battery, and the control system according to any one of (1) to (3).

With this, it is possible to stably supply power by suppressing the variation in the frequency and the voltage of the bus even in a case where the output of the generator is varied.

(5) A control method according to a fifth aspect is a control method of a power conversion device that converts direct current power output by a secondary battery into alternating current power and supplies the alternating current power to a bus and that converts alternating current power of the bus into direct current power and supplies the direct current power to the secondary battery, in a power supply system including a generator, which has unintended output variability, and the secondary battery, the control method including: a step of generating a charging/-discharging command value for the secondary battery that compensates for a difference between power generated by the generator and total generated power of the power supply system; a step of calculating an effective voltage value and a phase of a virtual synchronous generator based on a rotor model that simulates driving of the virtual synchronous generator and that calculates a rotational speed of the virtual synchronous generator; a step of calculating a voltage and a phase at a connection point between the power conversion device and the bus; a step of calculating a phase difference angle between the phase of the virtual synchronous generator and the phase of the connection point; a step of determining a target value of effective power of the power conversion device based on the effective voltage value of the virtual synchronous generator, the voltage at the connection point, and the phase difference angle; and a step of generating a control command for the power conversion device that includes the determined target value of the effective power and the charging/discharging command value.

Industrial Applicability

According to the control system, the hybrid power system, and the control method, it is possible to suppress variation in a frequency and a voltage of a bus.
Reference Signs List
1: power supply system
10: engine generator
11: engine
12: generator
13: governor
14: AVR
20: solar generator
21: solar cell
22: inverter
30: power storage device
31: secondary battery
32: inverter
33: command generation device
40: control device
41: measurement value acquisition unit
42: charging/discharging command unit
331: voltmeter
332: computer
3321: command reception unit
3322: measurement value acquisition unit
3323: model storage unit
3324: drive torque calculation unit
3325: virtual power generation calculation unit
3326: bus calculation unit
3327: phase difference angle calculation unit
3328: target power determination unit
3329: command generation unit
3330: phase difference angle decreasing unit
3331: limiter
90: computer
91: processor
92: main memory
93: storage
94: interface
w1, w2: power meter

**Claims**

1. A control system of a power conversion device that converts direct current power output by a secondary battery into alternating current power and supplies the alternating current power to a bus and that converts alternating current power of the bus into direct current power and supplies the direct current power to the secondary battery, in a power supply system including a generator, which has unintended output variability, and the secondary battery, the control system comprising:

a charging/discharging command unit that generates a charging/discharging command value for the secondary battery that compensates for a difference between generated power of the generator and total generated power of the power supply system;
a virtual power generation calculation unit that calculates an effective voltage value and a phase of a virtual synchronous generator based on a rotor model that simulates driving of the virtual synchronous generator and that calculates a rotational speed of the virtual synchronous generator;

a bus calculation unit that calculates a voltage and a phase at a connection point between the power conversion device and the bus;

a phase difference angle calculation unit that calculates a phase difference angle between the phase of the virtual synchronous generator and the phase of the connection point;

a target power determination unit that determines a target value of effective power of the power conversion device based on the effective voltage value of the virtual synchronous generator, the voltage at the connection point, and the phase difference angle; and

a command generation unit that generates a control command for the power conversion device that includes the determined target value of the effective power and the charging/discharging command value.

2. The control system according to Claim 1, wherein, in a case where variation per unit time of the difference between the power generated by the generator and the total generated power of the power supply system exceeds a predetermined threshold value, the charging/discharging command unit generates the charging/discharging command value that compensates for excess.

3. The control system according to Claim 1, wherein the charging/discharging command unit generates the charging/discharging command value that compensates for a value obtained by subtracting the difference between the power generated by the generator and the total generated power of the power supply system from a moving average of the difference.

4. A hybrid power system comprising:

a generator having unintended output variability;

a secondary battery;

a power conversion device that converts direct current power output by the secondary battery into alternating current power and supplies the alternating current power to a bus, and converts alternating current power of the bus into direct current power and supplies the direct current power to the secondary battery; and

the control system according to Claim 1.

5. A control method of a power conversion device that converts direct current power output by a secondary battery into alternating current power and supplies the alternating current power to a bus and that converts alternating current power of the bus into direct current power and supplies the direct current power to the secondary battery, in a power supply system including a generator, which has unintended output variability, and the secondary battery, the control method comprising:

a step of generating a charging/discharging command value for the secondary battery that compensates for a difference between power generated by the generator and total generated power of the power supply system;

a step of calculating an effective voltage value and a phase of a virtual synchronous generator based on a rotor model that simulates driving of the virtual synchronous generator and that calculates a rotational speed of the virtual synchronous generator;

a step of calculating a voltage and a phase at a connection point between the power conversion device and the bus;

a step of calculating a phase difference angle between the phase of the virtual synchronous generator and the phase of the connection point;

a step of determining a target value of effective power of the power conversion device based on the effective voltage value of the virtual synchronous generator, the voltage at the connection point, and the phase difference angle; and

a step of generating a control command for the power conversion device that includes the determined target value of the effective power and the charging/discharging command value.

## FIG. 1

# FIG. 2

FIG. 3

(PV GENERATED POWER –
TOTAL GENERATED POWER)

RATE LIMIT
(kW/s)

+  −

CHARGING
/DISCHARGING
COMMAND

FIG. 4

(PV GENERATED POWER –
TOTAL GENERATED POWER)

Mai

MOVING AVERAGE

+  −

CHARGING
/DISCHARGING
COMMAND

## FIG. 5A

LOAD, VOLTAGE,
AND FREQUENCY

VSG

## FIG. 5B

LOAD, VOLTAGE,
AND FREQUENCY

VSG + PV LEVELING

# FIG. 6

# FIG. 7

FIG. 8

## INTERNATIONAL SEARCH REPORT

International application No.

**PCT/JP2023/026388**

### A. CLASSIFICATION OF SUBJECT MATTER

*H02J 3/38*(2006.01)i; *H02J 3/32*(2006.01)i
FI:    H02J3/38 110; H02J3/32

According to International Patent Classification (IPC) or to both national classification and IPC

### B. FIELDS SEARCHED

Minimum documentation searched (classification system followed by classification symbols)

H02J3/00-7/12; H02J7/34-7/36; H02J13/00; H02M7/42-7/98

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2021-029087 A (MITSUBISHI HEAVY INDUSTRIES ENGINE & TURBOCHARGER, LTD.) 25 February 2021 (2021-02-25)<br>paragraphs [0004]-[0046], fig. 1-7 | 1-5 |
| Y | JP 2015-015793 A (KAWASAKI JUKOGYO KK) 22 January 2015 (2015-01-22)<br>paragraphs [0009]-[0019], [0024]-[0077], fig. 1-9 | 1-5 |
| A | JP 2011-205824 A (TOKYO ELECTRIC POWER CO INC) 13 October 2011 (2011-10-13)<br>paragraphs [0010]-[0030], fig. 1-4 | 1-5 |

☐ Further documents are listed in the continuation of Box C.          ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
#### Information on patent family members

International application No.

**PCT/JP2023/026388**

| Patent document cited in search report | | | Publication date (day/month/year) | Patent family member(s) | | | Publication date (day/month/year) |
|---|---|---|---|---|---|---|---|
| JP | 2021-029087 | A | 25 February 2021 | US | 2022/0255320 | A1 | |
| | | | | paragraphs [0005]-[0080], fig. 1-7 | | | |
| | | | | WO | 2021/029373 | A1 | |
| | | | | EP | 3982504 | A1 | |
| | | | | CN | 114128075 | A | |
| JP | 2015-015793 | A | 22 January 2015 | US | 2016/0149415 | A1 | |
| | | | | paragraphs [0012]-[0022], [0027]-[0089], fig. 1-9 | | | |
| | | | | WO | 2015/001800 | A1 | |
| | | | | EP | 3018787 | A1 | |
| | | | | ES | 2671845 | T3 | |
| JP | 2011-205824 | A | 13 October 2011 | (Family: none) | | | |

Form PCT/ISA/210 (patent family annex) (January 2015)

20

**REFERENCES CITED IN THE DESCRIPTION**

**Patent documents cited in the description**

- JP 2022151162 A

- JP 2021029087 A